# EUROPEAN PATENT SPECIFICATION

(11) **EP 1 322 672 B1**
(45) Date of publication and mention of the grant of the patent: **19.03.2008**
(21) Application number: 01979105.2
(22) Date of filing: 08.10.2001
(51) Int. Cl.: C08B 30/08, B01D 33/00

(54) **WASHING AND DEWATERING OF SUSPENSIONS**
WASCHEN UND ENTWÄSSERN VON SUSPENSIONEN
LAVAGE ET DESHYDRATATION DE SUSPENSIONS

(30) Priority: 06.10.2000 EP 00203470
(43) Date of publication of application: 02.07.2003
(73) Proprietor: Coöperatie AVEBE U.A., 9641 GK Veendam (NL)
(72) Inventor: FRANKE, Gijsbert, Theodorus, NL-9722 JE Groningen (NL); VAN DER WEERD, Hendrik, NL-9581 TL Musselkanaal (NL)
(74) Representative: Prins, Adrianus Willem
(86) International application number: PCT/NL2001/000739
(87) International publication number: WO 2002/028907

(56) References cited:
- EP-A- 0 738 531
- WO-A-97/31627
- NL-C- 55 858
- US-A- 3 664 855
- US-A- 4 216 310
- US-A- 4 774 009
- A. RUSHTON, A. S. WARD, R. G. HOLDICH: "SOLID-LIQUID FILTRATION AND SEPARATION TECHNOLOGY, 1st edn." 1996 , VCH , WEINHEIM/DE XP002163092 page 174
- KIRK-OTHMER: "ENCYCLOPEDIA OF CHEMICAL TECHNOLOGY, 4th. edn., vol. 10" , JOHN WILEY & SONS , NEW YORK/NY XP002163093 page 812 -page 814; figure 12

## Description

The present invention relates to the field of process technology. More in particular, the invention relates to separation and purification techniques.

Generally, suspensions are considered convenient forms of mixtures. In as far as a homogeneous distribution of reagents within the suspension can be achieved, they may be employed as a medium for carrying out chemical conversions. The main reason why suspensions may be considered advantageous, for instance when compared to solutions, is that separation of the solid and liquid fraction, constituting the suspension, can be easily accomplished.

Starch is a product which is particularly suitable to be processed and chemically modified in suspension form. Native starch is a granular product, which can be kept in its granular form by maintaining suitable process conditions. If irreversible swelling and gelatinization can be avoided, essentially no starch will be lost to the liquid medium, usually water, in which it is suspended.

After conversion is completed, the chemically modified starch needs to be recovered from the suspension in which the conversion was performed. Excess of reagents, by-products such as salts, and other impurities have to be separated from the starch product. Conveniently, the aqueous medium of the suspension, in which most if not all impurities are dissolved, can be removed and the starch product is dried. The starch product is washed before drying.

In the starch industry, where large amounts of starch are processed, the washing and dewatering steps have been found to be not so easy, and particularly difficult to carry out in an economically attractive fashion. In large scale production facilities, the washing and dewatering are carried out as two separate steps. In order to maintain a continuous process set-up and optimum efficiency, hydrocyclones are often used, as is described in e.g. EP-A-0 517 965. The use of this type of apparatus requires large amounts of water to achieve a thorough washing. The dewatering is generally performed using a segmented vacuum (drum) filter having multiple vacuum chambers or using a centrifuge.

It will be clear that it is a disadvantage of the known process setup that the washing and dewatering are carried out in two steps. Also, the efficiency of washing, in particular with regard to the required amount of water, in hydrocyclones is not as efficient as would be desirable. Hydrocyclones are relatively costly devices to install, they require high maintenance. Furthermore, they are relatively inefficient in their energy consumption and in their washing and yield of starch. Because of this, current setups require quite a number of recycle steps to ensure an effective removal of impurities on the one hand, and to reduce the amount of starch lost to waste streams as much as possible.

In fact, due to the many back-loop steps and the large amounts of water needed in the current process setup, it has not been found feasible to design a closed system wherein all water used for washing and recovered after dewatering is recycled to be used for suspending the starch before the chemical conversion. Furthermore, as a result of the many back-loops, the population of microorganisms in the system will increase markedly with every cycle. As many of the objective starch products may also find application in the food or pharmaceutical industries, such microbial contamination constitutes a grave disadvantage.

US patent 4,216,310 discloses a process for phosphorylating starch. In this process, the phosphate reagent used is introduced by spraying on a moist starch cake on a rotary vacuum filter. The reagent is introduced in the form of an aqueous solution which is intended to remain in the starch cake so that the desired reaction may take place. The vacuum filter is thus not used to carry out a washing step of the starch. As is illustrated by Example VII of the document, filtration is performed using a Buchner funnel.

US patent 4,774,009 relates to a method for dewatering slurries using an automatic pressure filter, which is clearly distinct from a rotary vacuum filter.

The international patent application 97/31627 is concerned with a process for preparing a tabletting excipient. As illustrated in the examples, the starch product that is intended as a tabletting excipient is washed on a vacuum filter. However, the removal of fluids (i.e. filtration) is a separate step and not performed on a vacuum filter. Furthermore, significant amounts of fluid are used for the washing on the vacuum filter (up to two times the volume of the slurry to be washed), which is something the present invention aims to avoid.

European patent application 0 738 531 discloses a rotary drum type device for separating solid particles from a liquid. It is not disclosed or suggested that a rotary vacuum filter may be used for both washing and dewatering a starch suspension.

The present invention seeks to find an improved manner for carrying out the washing and dewatering of starch suspensions. It is an object of the invention that both actions can be carried out in one step with great efficiency. It is further an object of the invention that the amounts of water needed for an efficient washing are significantly reduced, preferably to such an extent that all water in the process setup for carrying out a chemical modification of the starch in a suspension reaction can be recycled.

Surprisingly, it has now been found that the above objectives can be achieved by carrying out both the washing and the dewatering on a vacuum filter. This has been proven feasible on the condition that a certain minimal cake thickness on the filter is maintained.

Thus, the invention relates to a process for washing and dewatering a starch suspension, using a vacuum filter having at least a retentate and a filtrate side, comprising the steps of
- applying the suspension onto the retentate side of the vacuum filter to produce a filter cake having a height h of at least 1.5 mm;
- providing a pressure at the filtrate side of the vacuum filter which is lower than the pressure at the retentate side;
- providing a washing liquid onto the filter cake;
- maintaining the pressure difference for sufficient time to allow dewatering; and
- removing the washed and dewatered starch from the vacuum filter.

In comparison with the prior art processes for washing and dewatering starch suspensions, the present process is a very efficient and elegant process. Significantly smaller investments in equipment are necessary for setting up the present process. Furthermore, the present process requires the use of only very small amounts of washing liquid in relation to the amount of processed starch, while the capacity of the process may be essentially equal to that of the prior art processes. Hence, the present invention provides a significant reduction of the amount of energy required for washing and dewatering processes of starch. The environment will of course benefit greatly from this, as well as from the reduced amount of water that is required for the washing.

In addition, due to the advantageous features of a process according to the invention, it has proven feasible to design a closed system with regard to the use of liquids for suspension reactions of starch. Further, the presence of microbial populations in the process can be conveniently controlled in a process according to the invention.

The starch suspension to be washed and dewatered in accordance with the invention may comprise any type of starch. Suitable examples include potato starch, corn starch, tapioca starch, wheat starch, barley starch and the like. It has been found that particularly the washing and dewatering of suspensions of starch of relatively large granule size benefit from the invention. Accordingly, it is preferred that the suspension is a suspension of potato starch. These starches have a mean particle diameter between 5 and 100, preferably between 10 and 35 µm. Preferably, the present process is part of a continuous process for converting or modifying starch chemically in a suspension process. Thus, the starch will generally be a converted starch.

The starch suspension will usually be an aqueous suspension. Most, if not all, modifications and conversions of starch are preferably performed in an aqueous environment. The present invention may, however, also be of use in the washing and removal of solvents from other suspensions. Particularly, alcoholic suspensions, such as suspensions in ethanol, may under circumstances by processed. Of course, it is also possible that the suspension comprises two or more solvents. In general, the washing liquid will be the same as the solvent in the suspension. Also, in view of the fact that the suspension to be treated in accordance with the invention, will usually originate from a chemical modification or conversion step, the suspension will comprise contaminants such as by-products, remnants of reagents, catalysts. These will generally dissolve in the liquid medium of the suspension and be removed during the present process.

An important aspect of the invention is that the washing and dewatering are carried out on a vacuum filter. In the context of the invention, the term 'vacuum filter' is intended to refer to a substantially cylindrical, rotary drum filter having one or more vacuum chambers, each chamber being connected to a vacuum source that can provide a pressure at the inside of the drum that is lower than the pressure at the outside of the drum. Also, the outer surface i.e. the mantle of the drum has filter characteristics which enable a liquid, fraction of a suspension, e.g. water with dissolved impurities, to migrate through the mantle, and a solid fraction of the suspension, e.g. starch to remain outside the mantle of the drum. The filter will further be equipped with means to turn the drum around an axial axis. The size and capacity of the vacuum filter will be chosen dependent on the scale on which the present process is to be carried out.

A washing and dewatering apparatus that is particularly suitable to carry out the process of the invention comprises
- a substantially cylindrical drum having a mantle surface of filter material enclosing a singular vacuum chamber that is connected to a vacuum source, such that a radially outward retentate side of the filter material can retain a solid fraction of a suspension applied onto the mantle surface, while a liquid fraction of the suspension can pass into the vacuum chamber,
- a drive for rotating the drum about a central longitudinal axis in a fixed rotational direction,
- a feeder for feeding a suspension onto the mantle surface, the feeder having a feeding opening extending at a radial distance in axial direction along the mantle surface,
- a sprayer for spraying washing liquid onto a solid fraction of the suspension retained on the mantle surface, extending at a radial distance along the mantle surface, and
- a scraper for scraping a top layer of a retained solid fraction from said mantle surface, having a scraping surface extending at a radial distance in axial direction along the mantle surface,
the feeder, sprayer and scraper being disposed along the circumference of the drum such that the mantle surface comprises a longitudinally extending feeding zone, in rotational direction preceded by a longitudinally extending scraping zone and followed at a rotational distance by a longitudinally extending washing zone.

Another important aspect of the invention is the thickness of the filter cake. In accordance with the invention it has been found that the thicker the filter cake, the more efficient the dewatering and, in particular, the washing will take place. Where conventional washing processes on a vacuum filter employ a filter cake thickness of from 0.4 to 1 mm, the present process which also involves dewatering requires a filter cake thickness of at least 1.5 mm, and preferably at least 2 mm. In case it is desired that water with impurities therein are removed from the starch suspension to very great extent, even higher thicknesses may be employed, typically between 3 and 15 mm. This will be particularly be the case when the starch product in the suspension is intended for applications in the food or pharmaceutical industries.

In the process of the invention, the pressure inside the drum is preferably kept as low as possible to facilitate an efficient dewatering and filtering process. Typical pressures to be maintained in the drum lie between 0.01 and 0.7, preferably between 0.1 and 0.3 bar. The drum is preferably rotated at a relatively slow speed. Suitable rotation speed may depend on the desired application of the starch. In cases where the starch is intended to be used in the food or pharmaceutical industries, the rotation speed may be chosen in the range of from 0.1 to 1 rpm. In other cases the rotation speed may be higher, e.g. in the range of 3 to 5 rpm. It is further desired that a process according to the invention is carried out at elevated temperature, although gelatinization of the starch is of course to be prevented. Typical suitable temperatures lie between 15 and 35°C, and are preferably between 25 and 35°C.

In a preferred embodiment, a precoat is first applied to the drum filter. The term precoat refers to a cake present on the filter, which is not removed after the washing and dewatering have been completed. If, as will usually be the case, the present process is performed continuously, the precoat remains present during the entire continuously performed process. Nevertheless, occasionally it may be desired to refresh the precoat even though that would mean an interruption of the continuous process. This may for instance be the case when the precoat becomes impenetrable for the filtrate and washing liquid or when the precoat becomes contaminated. It has been found that the presence of the precoat ensures that substantially no starch is lost to the filtrate during the process. The thickness of the precoat preferably lies between 0.5 and 10 mm, more preferably between 3 and 6 mm.

The washing liquid used for washing the starch suspension in process according to the invention will usually be chosen the same as the liquid in which the starch is suspended. Usually, the washing liquid will be water. As has been mentioned above, it is an advantage of the invention that relatively small amounts of washing liquid suffice to achieve a thorough and efficient washing. Under many circumstances, it has been found possible use the washing liquid in an amount of 1 liter per 1 kilogram of starch, while achieving the same quality with regard to purity and degree of dewatering when compared to conventional washing and dewatering processes.

The starch suspension may be washed and dewatered on the vacuum filter in a conventional setup of the vacuum filter, examples of which are well-known in the art.

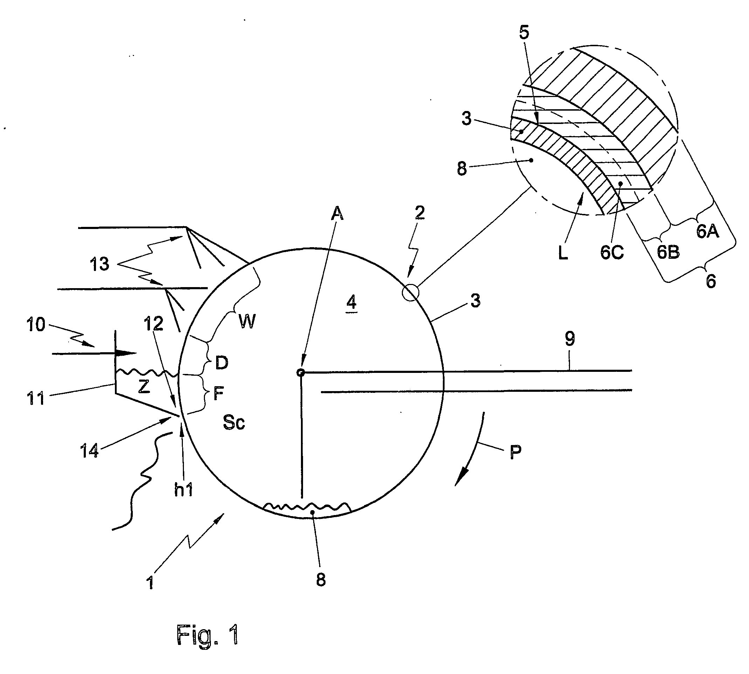

In a preferred embodiment, a specially designed washing and dewatering apparatus is employed. An example of this is shown in Figure 1.

Figure 1 schematically shows a side view of a washing and deliquifying apparatus, especially configured for carrying out the invention. The apparatus 1 comprises a substantially cylindrical drum 2 having a mantle surface 3 of filter material enclosing a singular vacuum chamber 4. The vacuum chamber 4 is connected to a vacuum source, e.g. a pump. Under vacuum action, a radially outward retentate side 5 of the filter material can retain a solid fraction 6 of a suspension 7 applied onto the mantle surface 3. A liquid fraction 8 of the suspension 7 can pass into the vacuum chamber 4. The liquid fraction 8 can be removed from the vacuum chamber 4 by means of a conduit 9 that is connected to e.g. a pump. Preferably, the apparatus has a relatively low internal resistance with regard to the filtrate stream, thereby facilitating the formation of the filter cake on the mantle surface.

The drum 2 comprises a singular vacuum chamber 4. The singular vacuum chamber 4 may however be built up of several interconnected segments, each having the same pressure.

The apparatus 1 further comprises a drive (not shown) for rotating the drum 2 about its central longitudinal axis A in a fixed rotational direction, e.g. clockwise in the direction of arrow P. The central axis A of the drum 2 extends substantially horizontally.

The apparatus 1 further comprises a feeder, in this example embodied as a trough, i.e. an open conduit, extending at a radial distance h1 along the mantle surface 3. The trough has a feeding opening 12 through which a suspension 7, e.g. having a solid fraction in the form of starch granules suspended in water, can be fed onto the mantle surface 3. The feeder 11 is disposed at a top half of an upwardly moving section of the drum, approximately between the 9 and 12 o'clock position when the rotating direction is clockwise and approximately between the 3 and 12 o'clock position when the rotational direction is counterclockwise. It is particularly advantageous of this configuration that the filter can process suspensions of high starch concentrations (up to 40 wt.%). This makes it possible that suspensions obtained from a starch modification reaction may be washed and dewatered without prior dilution.

The apparatus 1 further comprises a sprayer 13 for spraying washing liquid onto a solid fraction 6 of the suspension 7 retained on the mantle surface 3. The sprayer 13 comprises two rows of interspaced nozzles, extending at a radial distance in axial direction along the mantle surface 3. It is to be understood that many configurations of the sprayer are possible and that the term 'sprayer' should not interpreted as to give any indication of the pressure behind the washing liquid that is provided by the sprayer to the solid fraction 6. The washing liquid may also be added to the solid fraction dropwise or in the form of a falling film of liquid.

In addition, the apparatus 1 comprises a scraper 14 for scraping a top layer 6A of a retained solid fraction 6 from the mantle surface 3. The scraper 14 has a scraping surface formed by or integrated with a bottom portion of the trough, of which the edge extends at a radial distance h1 in axial direction along the mantle surface 3. In the shown embodiment, the scraper 14 is integrated with the feeder 13, such that the feeding zone is, in rotational direction P, adjacent to the scraping zone.

The feeder 11, sprayer 13 and scraper 14 are disposed along the circumference of the mantle 3 of the drum 2 such that the mantle surface 3 comprises a feeding zone F that is, in rotational direction P preceded by a scraping zone S and which is followed at a rotational distance by a washing zone W. In the zone D corresponding to the rotational distance, the original liquid fraction 8 of the suspension 7 that is applied to the mantle surface 3 passes at least partially through the filter material of the mantle into the vacuum chamber 4. It will be clear that D may also be zero. At the washing zone W, a new liquid fraction is applied by means of the sprayer B, which under vacuum action passes through the filter material of the mantle surface 3, thereby fully displacing the original liquid fraction in a washing action.

As the feeder 11, the sprayer 13 and the scraper 14 are during washing and deliquifying maintained at a radial distance from the mantle surface, a minimal thickness of solid fraction 6 is maintained on the mantle surface 3 of the drum 2. This allows for the use of a singular vacuum chamber 4. In the washing and deliquifying apparatus, a very large part of the circumference of the drum 2 is available for deliquifying.

As set out above, preferably a precoat is brought onto the mantle surface 3 before the washing and deliquifying process is started. This may be achieved by temporarily moving the feeder 13 and the scraper 14 radially closer to the mantle surface, or by dosing suspension onto the mantle surface. Depending on the thickness of the precoat, this distance may be 0.5-2 mm. In fig. 1, the precoat is shown as a portion 6C of the portion retained solid fraction 6B that remains on the mantle surface during washing and deliquifying.

It shall be clear that the washing and deliquifying apparatus is not limited to the embodiment shown. The drum may e.g. have a vertical axis, and the feeder may comprise tubes, nozzles, a feeding plate or a falling curtain. Such variations can also be envisaged for the sprayer. Also, the scraper may comprise a number of scraping plates, a wedge of any other type of scraping tool.

Such variations will readily spring to the mind of the skilled man and are within the scope of the washing and dewatering apparatus as claimed.

After being washed and dewatered as described above, the obtained starch may be dried to a desired water content in any conventional manner.

The invention further relates to a process for chemically converting of modifying starch in a suspension reaction, wherein the suspension comprising the reaction product of the conversion or modification is washed and dewatered as described above. It is one of the great advantages of the invention that the washing and dewatering can be performed in a one step procedure, making the currently used hydrocyclones obsolete. It is furthermore a great advantage of the invention that only small amounts of water are required for achieving a thorough and efficient washing of the starch. This leads thereto, that all water in the conversion or modification process, including the washing and dewatering step, can be recycled. Thus, the invention also provides a substantially closed reaction system wherein all water streams may be recycled.

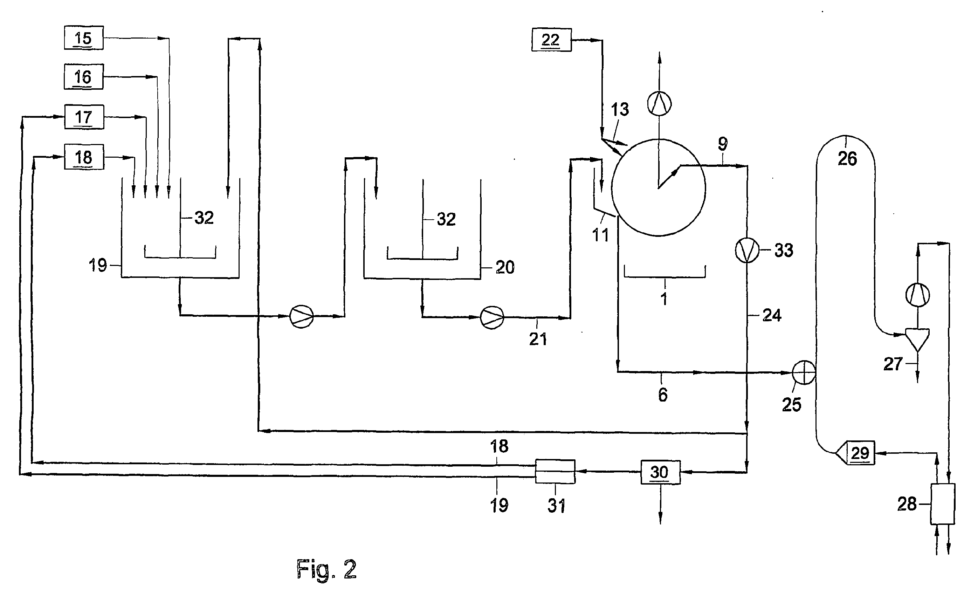

A possible setup according to this embodiment of the invention is shown in Figure 2. Of course, many variations to this setup are possible. The skilled person will readily conceive of such variations, which should all considered to be within the scope of the invention.

In Figure 2, a reactor 19 is shown in which any derivatization reaction of starch may be carried out. It is equipped with a stirrer 32 and feeds for reagents 15, starch 16, caustics 17, and acids 18. The water that is used in the reactor, is recycled water from the dewatering step further on.

The reaction suspension 21 that is obtained after the reaction may be lead to a reservoir 20 equipped with a stirrer 32 to hold the suspension for a certain desired period of time. From this reservoir, the suspension 21 is lead to a vacuum filter, preferably a vacuum filter as described above 1. Through the sprayers 13, washing water 22 is passed to the vacuum filter where washing and dewatering is carried out in accordance with the invention.

The filtrate obtained after the washing and dewatering 24 is passed through a conduit 9 to an air/water separator 23, from which the filtrate 24 is recycled into the process as water for preparing the suspension in the reactor 19. Part of the filtrate 24 may be used to regenerate acids and caustics in a pre-regeneration unit 30 and an acid/base regeneration unit 31.

The dewatered solid fraction obtained after the washing and dewatering according to the invention 6 is passed to a pneumatic drier 26 via a feeding wheel 25. The pneumatic drier is fed with dry air from a heater 29. Eventually, the dried starch derivative is collected for packaging 27. The heat present in the dried product is preferably recycled as much as possible into the process by way of a heat exchange unit 28.

The invention will now be further elucidated by the following, non-restrictive examples.

### Example I: Oxidized and etherified potato starch (non food products)

After the oxidation and etherification under conventional conditions, a neutralized starch derivative is washed in a countercurrent washing process (hydrocyclones). The demand of wash water is 3-4 kg per kg derivative based on dry substance. The washed slurry is dewatered on a (segmented) vacuum filter . The feed is bottomwise (position 6 o'clock) The density of the suspension is 25% w/w (25 g derivative based on dry substance per 100 g suspension). The rotation speed of the drum is 12 rpm.

With a precoat of 5 mm and a pressure difference of 0.4-0.5 bar, the emerging zone is managed in such a way that a topcoat of 0.4 mm is formed. The specific conductance (specification limit < 600 mScm-¹) is 300-400 mScm-¹. The capacity is 320 kg dry substance per m².h The remaining moisture content of the filter cake is 38-40%.

### Example II: Crosslinked potato starch (food products)

After a conventional crosslink reaction, a neutralized starch derivative is washed in a countercurrent washing process (hydrocyclones). The demand of wash water is 3-4 kg per kg derivative based on dry substance. The washed slurry is dewatered on a (segmented) vacuum filter. The feed is bottomwise (position 6 o'clock) The density of the suspension is 27% w/w (27 g derivative based on dry substance per 100 g suspension). The rotation speed of the drum is 12 rpm.

With a precoat of 5 mm and a pressure difference of 0.5-0.7 bar, the emerging zone is managed in such a way that a topcoat of 1.0 mm is formed. The specific conductance (specification limit < 300 mScm-¹) is 50-100 mScm-¹. The capacity is 470 kg dry substance per m².h The remaining moisture content of the filter cake is 38.3-38.9%.

### Example III: Oxidized potato starch

The process resembles that of the crosslinked derivative. The remaining moisture content for the oxidized starch is 40.7-41.5% The capacity is 470 kg dry substance per m².h.

### Example IV: Oxidized and etherified potato starch (non food products)

After oxidation and etherification under conventional conditions, a neutralized reaction suspension is pumped to the feed of a vacuum filter. The concentration of the reaction suspension is 30% w/w (30 g derivative based on dry substance per 100 g suspension). The vacuum filter is equipped with nozzles mounted just above the filter cake and just after the emerging phase. The wash water is sprayed on the filter cake resulting in a very effective removal of the soluble impurities. The demand of wash water is 1 kg per kg derivative based on dry substance. The rotation speed of the drum is 4 rpm. With a precoat of 4 mm and a pressure difference of 0.4-0.5 bar, the emerging zone is managed in such a way that a topcoat of 1.5 mm is formed. The specific conductance (specification limit < 600 mScm⁻¹) is 400-500 mScm⁻¹which indicates a removal of 90%. The capacity is 290 kg dry substance per m².h. The remaining moisture content of the filter cake is equal to the process in which the dewatering and washing are carried out separate from each other.

### Example V: Crosslinked potato starch (food products)

After a conventional crosslinking reaction, a neutralized reaction suspension is pumped to the feed of the vacuum filter. The concentration of the reaction suspension is 30% w/w (30 g derivative based on dry substance per 100 g suspension). The vacuum filter is equipped with nozzles mounted just above the filter cake and just after the emerging phase. The wash water is sprayed on the filter cake resulting in a very effective removal of the soluble impurities. The demand of wash water is 1 kg per kg derivative based on dry substance. The rotation speed of the drum is 0.6 rpm. With a precoat of 4 mm and a pressure difference of 0.6-0.75 bar, the emerging zone is managed in such a way that a topcoat of 10 mm is formed. The specific conductance (specification limit < 300 mScm⁻¹) is 50 mScm⁻¹which indicates a removal of 98%. The capacity is 225 kg dry substance per m².h, a reduction of 50% with respect to the process with separated washing and dewatering devices. The remaining moisture content of the filter cake is 37.8-38.2%.

### Example VI: Oxidized potato starch (food product)

The process resembles that of the crosslinked derivative. The remaining moisture content for the oxidized starch is 40.0-41.1% The capacity is 210 kg dry substance per m².h.

### Example VII: Bottomwise feed versus side feed of the vacuum filter (present vs optimized feed)

A suspension of starch in water is dewatered by means of vacuum filtration equipped with a bottomwise feed. A stable process is obtained with respect to the thickness of the topcoat for concentrations of the suspension lower than 32%. In contrast with the bottom feed the side wise feed could handle concentrations up to 39%. Above these concentration the suspension become shear thickening.

## Claims

1. A process for washing and dewatering a starch suspension, using a vacuum filter having at least a retentate and a filtrate side, comprising the steps of
- applying the suspension onto the retentate side of the vacuum filter to produce a filter cake having a height h of at least 1.5 mm;
- providing a pressure at the filtrate side of the vacuum filter which is lower than the pressure at the retentate side;
- providing a washing liquid onto the filter cake;
- maintaining the pressure difference for sufficient time to allow dewatering; and
- removing the washed and dewatered starch from the vacuum filter.

2. A process according to claim 1, wherein the filter cake has a height h of at least 2 mm.

3. A process according to claim 2, wherein the filter cake has a height h of between 3 and 15 mm.

4. A process according to claim 3, wherein a precoat of starch is applied to the retentate of the vacuum filter to which the suspension is applied, which precoat is substantially kept in place when the washed and dewatered starch is removed.

5. A process according to claim 4, wherein the precoat has a thickness of between 0.5 and 10 mm.

6. A process according to any of the preceding claims, wherein the suspension is a potato starch suspension.

7. A process according to any of the preceding claims, wherein the washing liquid is water.

8. A process according to any of the preceding claims, wherein the washing liquid is applied in an amount of between 10 and 250 wt.%, preferably between 50 and 100 wt.%, with respect to the weight of the starch.

9. A process according to any of the preceding claims, wherein the vacuum filter is part of a washing and deliquifying apparatus, comprising:
- a substantially cylindrical drum having a mantle surface of filter material enclosing at least one vacuum chamber, each vacuum chamber being connected to a vacuum source, such that a radially outward retentate side of the filter material can retain a solid starch fraction of a starch suspension applied onto the mantle surface, while a liquid fraction of the suspension containing water and impurities can pass into the vacuum chambers,
- a drive for rotating the drum about a central longitudinal axis in a fixed rotational direction,
- a feeder for feeding the starch suspension onto the mantle surface, the feeder having a feeding opening extending at a radial distance in axial direction along the mantle surface,
- a sprayer for spraying washing water onto a solid fraction of the suspension retained on the mantle surface, extending at a radial distance along the mantle surface, and
- a scraper for scraping a top layer of a retained solid fraction from said mantle surface, having a scraping surface extending at a radial distance in axial direction along the mantle surface,
the feeder, sprayer and scraper being disposed along the circumference of the drum such that the mantle surface comprises a feeding zone, in rotational direction preceded by a scraping zone and followed by a washing zone.

10. A process for chemically converting or modifying starch in a suspension reaction, wherein the suspension comprising the chemically converted or modified starch is washed and dewatered in a process according to any of the preceding claims.

## Patentansprüche

1. Verfahren zum Waschen und Entwässern einer Stärkesuspension unter Verwendung eines Vakuumfilters, der wenigstens eine Retentat- und eine Filtratseite aufweist, die folgenden Schritte umfassend:
- Auftragen der Suspension auf die Retentatseite des Vakuumfilters, so dass ein Filterkuchen mit einer Höhe h von wenigstens 1,5 mm entsteht;
- Anlegen eines Drucks auf der Filtratseite des Vakuumfilters, der niedriger ist als der Druck auf der Retentatseite;
- Aufbringen einer Waschflüssigkeit auf den Filterkuchen;
- Aufrechterhalten der Druckdifferenz während einer ausreichenden Zeit, um eine Entwässerung zu ermöglichen; und
- Entfernen der gewaschenen und entwässerten Stärke aus dem Vakuumfilter.

2. Verfahren gemäß Anspruch 1, wobei der Filterkuchen eine Höhe h von wenigstens 2 mm hat.

3. Verfahren gemäß Anspruch 2, wobei der Filterkuchen eine Höhe h zwischen 3 und 15 mm hat.

4. Verfahren gemäß Anspruch 3, wobei eine Vorbeschichtung aus Stärke auf das Retentat des Vakuumfilters aufgetragen wird, auf die die Suspension aufgetragen wird, wobei die Vorbeschichtung im Wesentlichen an Ort und Stelle gehalten wird, wenn die gewaschene und entwässerte Stärke entfernt wird.

5. Verfahren gemäß Anspruch 4, wobei die Vorbeschichtung eine Dicke zwischen 0,5 und 10 mm hat.

6. Verfahren gemäß einem der vorstehenden Ansprüche, wobei die Suspension eine Kartoffelstärkesuspension ist.

7. Verfahren gemäß einem der vorstehenden Ansprüche, wobei es sich bei der Waschflüssigkeit um Wasser handelt.

8. Verfahren gemäß einem der vorstehenden Ansprüche, wobei die Waschflüssigkeit in einer Menge zwischen 10 und 250 Gew.-%, vorzugsweise zwischen 50 und 100 Gew.-%, bezogen auf das Gewicht der Stärke, aufgetragen wird.

9. Verfahren gemäß einem der vorstehenden Ansprüche, wobei der Vakuumfilter Teil einer Wasch- und Entliquifizierungsapparatur ist, die Folgendes umfasst:
- eine im Wesentlichen zylindrische Trommel mit einer Mantelfläche aus Filtermaterial, die wenigstens eine Vakuumkammer umschließt, wobei jede Vakuumkammer mit einer Vakuumquelle verbunden ist, so dass eine radial nach außen gerichtete Retentatseite des Filtermaterials eine feste Stärkefraktion einer auf die Mantelfläche aufgetragenen Stärkesuspension zurückhalten kann, während eine flüssige Fraktion der Suspension, die Wasser und Verunreinigungen enthält, in die Vakuumkammern treten kann;
- einen Antrieb zum Rotierenlassen der Trommel um eine zentrale Längsachse in einer festen Rotationsrichtung;
- eine Aufgabevorrichtung zum Aufgeben der Stärkesuspension auf die Mantelfläche, wobei die Aufgabevorrichtung eine Aufgabeöffnung aufweist, die sich in einem radialen Abstand in axialer Richtung entlang der Mantelfläche erstreckt;
- eine Sprühvorrichtung zum Aufsprühen von Waschwasser auf eine auf der Mantelfläche zurückgehaltene feste Fraktion der Suspension, die sich in einem radialen Abstand entlang der Mantelfläche erstreckt; und
- einen Schaber zum Abschaben einer oberen Schicht einer zurückgehaltenen festen Fraktion von der Mantelfläche, der eine Schabefläche aufweist, die sich in einem radialen Abstand in axialer Richtung entlang der Mantelfläche erstreckt;
wobei die Aufgabevorrichtung, die Sprühvorrichtung und der Schaber so entlang des Umfangs der Trommel angeordnet sind, dass die Mantelfläche eine Aufgabezone umfasst, der in Rotationsrichtung eine Schabezone vorangeht und eine Waschzone folgt.

10. Verfahren zur chemischen Umwandlung oder Modifikation von Stärke in einer Suspensionsreaktion, wobei die Suspension, die die chemisch umgewandelte oder modifizierte Stärke umfasst, in einem Verfahren gemäß einem der vorstehenden Ansprüche gewaschen und entwässert wird.

## Revendications

1. Procédé de lavage et déshydratation d'une suspension d'amidon, utilisant un filtre à vide ayant au moins un côté de rétentat et un côté de filtrat, comprenant les étapes consistant à :
- appliquer la suspension sur le côté de rétentat du filtre à vide pour produire un gâteau de filtration ayant une hauteur h d'au moins 1,5 mm ;
- fournir une pression au niveau du côté de filtrat du filtre à vide qui est inférieure à la pression au niveau du côté de rétentat ;
- fournir un liquide de lavage sur le gâteau de filtration ;
- maintenir la différence de pression pendant un temps suffisant pour permettre une déshydratation ; et
- retirer l'amidon lavé et déshydraté du filtre à vide.

2. Procédé selon la revendication 1, dans lequel le gâteau de filtration a une hauteur h d'au moins 2 mm.

3. Procédé selon la revendication 2, dans lequel le gâteau de filtration a une hauteur h comprise entre 3 et 15 mm.

4. Procédé selon la revendication 3, dans lequel une précouche d'amidon est appliquée sur le rétentat du filtre à vide auquel est appliquée la suspension, laquelle précouche est sensiblement maintenue en place lorsque l'amidon lavé et déshydraté est retiré.

5. Procédé selon la revendication 4, dans lequel la précouche a une épaisseur comprise entre 0,5 et 10 mm.

6. Procédé selon l'une quelconque des revendications précédentes, dans lequel la suspension est une suspension d'amidon de pomme de terre.

7. Procédé selon l'une quelconque des revendications précédentes, dans lequel le liquide de lavage est de l'eau.

8. Procédé selon l'une quelconque des revendications précédentes, dans lequel le liquide de lavage est appliqué dans une quantité comprise entre 10 et 250 % en poids, de préférence, entre 50 et 100 % en poids, par rapport au poids de l'amidon.

9. Procédé selon l'une quelconque des revendications précédentes, dans lequel le filtre à vide fait partie d'un appareil de lavage et de déshydratation, comprenant:
- un tambour sensiblement cylindrique ayant une surface de manteau de matériau filtrant enfermant au moins une chambre à vide, de telle sorte qu'un côté de rétentat radialement vers l'extérieur du matériau filtrant puisse retenir une fraction d'amidon solide d'une suspension d'amidon appliquée sur la surface de manteau, alors qu'une fraction liquide de la suspension contenant de l'eau et des impuretés peut passer dans les chambres à vide,
- un entraînement pour faire tourner le tambour sur un axe longitudinal central dans une direction de rotation fixe,
- un dispositif d'alimentation pour fournir la suspension d'amidon sur la surface de manteau, le dispositif d'alimentation ayant une ouverture d'alimentation s'étendant à une distance radiale dans la direction axiale le long de la surface de manteau,
- un pulvérisateur pour pulvériser l'eau de lavage sur une fraction solide de la suspension retenue sur la surface de manteau, s'étendant à une distance radiale le long de la surface de manteau, et
- un racloir pour racler une couche supérieure d'une fraction solide retenue de ladite surface de manteau, ayant une surface de raclage s'étendant à une distance radiale dans la direction axiale le long de la surface de manteau,
le dispositif d'alimentation, le pulvérisateur et le racloir étant disposés le long de la circonférence du tambour, de telle sorte que la surface de manteau comprenne une zone d'alimentation, dans la direction de rotation précédée par une zone de raclage et suivie par une zone de lavage.

10. Procédé de conversion ou de modification chimique d'amidon dans une réaction de suspension, dans lequel la suspension comprenant l'amidon converti ou modifié chimiquement est lavée et déshydratée dans un procédé selon l'une quelconque des revendications précédentes.
